# EUROPEAN PATENT SPECIFICATION

(11) **EP 3 318 416 B1**
(45) Date of publication and mention of the grant of the patent: **24.11.2021**
(21) Application number: 16820756.1
(22) Date of filing: 25.06.2016
(51) Int. Cl.: B60C 7/00, B60B 21/00

(54) **BURST-RESISTANT TUBULAR AND EMBEDDED OPEN-STRUCTURE TIRE**
PLATZFESTER REIFEN MIT ROHRFÖRMIGER UND EINGEBETTETER OFFENER STRUKTUR
PNEU TUBULAIRE RÉSISTANT À L'ÉCLATEMENT ET À STRUCTURE OUVERTE ENCASTRÉE

(30) Priority: 03.07.2015 CN 201510391967
(43) Date of publication of application: 09.05.2018
(73) Proprietor: Shenzhen Kingtitan Technology Co., Ltd., Bao'an District Shenzhen Guangdong 518133 (CN)
(72) Inventor: WANG, Bing, Shenzhen Guangdong 518000 (CN); YU, Qian-Sun, Shenzhen Guangdong 518000 (CN)
(74) Representative: Vitina, Maruta
(86) International application number: PCT/CN2016/087176
(87) International publication number: WO 2017/005105

(56) References cited:
- WO-A1-2006/116807
- WO-A1-2008/118983
- WO-A1-2014/103721
- CN-A- 101 134 420
- CN-A- 101 314 315
- CN-A- 104 972 838
- CN-U- 204 915 127
- DE-A1- 19 548 902
- FR-A1- 2 922 159
- FR-A1- 2 927 844

## Description

### TECHNICAL FIELD

The present invention relates to the field of non-pneumatic tires, and more specifically to a burst-resistant tire with tubular embedded open-structure.

### BACKGROUND OF THE INVENTION

Tire is the generic term for tires, and is usually made of a wear-resistant rubber material, with a solid tire and a pneumatic tire. The pneumatic tire is composed of an inner tire and an outer tire, and the defect of the pneumatic tire is that the rubber material of the tire tread is easy to wear, and it is likely to have the inner tire burst because of the inflatable support. However, a plurality of defects exist in the solid tire in the prior art, such as which material is used to make solid tires. Later studies found that polyurethane materials have very good advantages for making tires, such as wear resistance and hardness adjustment.

Patent No. 200710108803.9 discloses a non-pneumatic vehicle tire, the tire is provided with a series of tread supporting rings of transversely-extending circular tubular channel and a series of inner rings of transversely-extending rim joint structure, so that the cost and the weight are reduced, and on the other hand, the comfort of the tire is improved. However, the structure is also problematic, since the tread supporting rings run through the whole placenta, when the diameter of the supporting rings is large, due to the fact that the span of the supporting rings is large and the supporting force of the tread between two adjacent supporting rings is small, it is easy to cause the uneven stress on the whole tread.

A French application FR 2 927 844 A1 discloses a non-pneumatic tire, in which a spoke structure obtained by circumferentially arranging spokes intermittently at intervals, which radially couple together annular cylindrical outer member and cylindrical inner member, is joined to an inner peripheral side of a tread ring, and at least some of a plurality of spaces each formed between two spokes adjacent to each other in the tire circumferential direction each have an air-containing structure. This structure can prevent buckling without a weigh increase. However, this design involves the use of an air-containing structure, so that there is still a certain risk of puncture.

An application WO 2014/103721 A1 discloses a non-pneumatic tire including an attachment body, a ring member, and a plurality of connecting members, where at least a portion of the ring member and the plurality of connecting members are integrally formed of a synthetic resin material. Though this structure can prevent the increase in weight, it also involves relatively complicated arrangement.

### SUMMARY OF THE INVENTION

The present invention aims to overcome the defects in the prior art, and provides a uniform stress, burst-resistant and tubular embedded open-structure tire.

The technical scheme of the present invention is as follows: a burst-resistant tire with tubular embedded open-structure, comprising an outer ring and an inner ring; the outer ring is divided into a left outer ring and a right outer ring symmetrically arranged through a radial plane of a tire center, wherein a left rim ring is provided between the left outer ring and the inner ring ; a right rim ring is arranged between the right outer ring and the inner ring, wherein the left rim ring and the right rim ring are connected at the radial plane of the tire center. The left rim ring comprises a plurality of rims evenly distributed around an axis of the inner ring and two adjacent rims are mutually connected to form a closed loop, and each rim of the left rim ring is in contact with the left outer ring and the inner ring; the right rim ring comprises a plurality of rims evenly distributed around an axis of the inner ring and two adjacent rims of the right rim ring are mutually connected to form a closed loop, and the rim is in contact with the right outer ring and the inner ring. The rim is parallel to the axis of the inner ring and is a tubular structure with a circular, an oval or a polygonal shape. The left rim ring and the right rim ring are symmetrically arranged, and a tubular structure of the left rim ring and the tubular structure of the right rim ring are longitudinally penetrated.

The radial cross section of the tire with tubular embedded open-structure is a trapezoid structure with equal size of the inner ring and the outer ring or larger outer ring and smaller inner ring.

The beneficial effects of the present invention are as follows: the present invention provides a burst-resistant tire with tubular embedded open-structure and is provided with a left rim ring and a right rim ring, and both the left rim ring and the right rim ring are in contact with the inner ring and the right rim ring. When touching the ground, a rim forms a buffer structure via left and right parts using a joint point between the rim and the outer ring as a center by contact with the outer ring, thereby rapidly dispersing stress, and avoiding force concentrating on a single point, causing overloading.

### BRIEF DESCRIPTION OF THE DRAWINGS

Fig. 1 is a front view of the tire of the left rim ring and the right rim ring according to an embodiment of the present invention;
Fig. 2 is a structural diagram of the rim inside the tire according to an embodiment of the present invention.

In the figures, 1 is the inner ring, 2 is the outer ring and 3 is the rim.

### DETAILED DESCRIPTION OF THE INVENTION

The technical scheme in the embodiments of the present invention will be described clearly and completely hereinafter with reference to the accompanying drawings in the embodiments of the present invention. Apparently, the described embodiments are merely some but not all embodiments of the present invention. All other embodiments obtained by those ordinary skill in the art based on the embodiments of the present invention without creative efforts shall fall within the protection scope of the present invention.

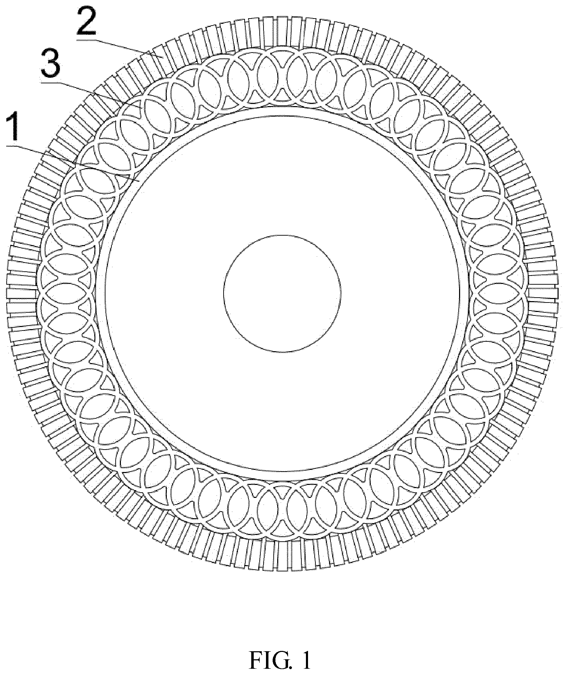

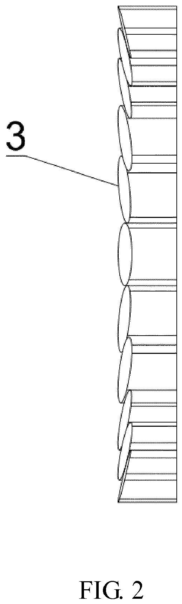

As shown in Fig. 1 and Fig. 2, a burst-resistant tire with tubular embedded open-structure is composed of an outer ring 2, an inner ring 1, a left rim ring and a right rim ring. The left rim ring and the right rim ring are connected with the outer ring 2 and the inner ring 1; the left rim ring and the right rim ring are also fixedly connected, the left rim ring and the right rim ring are symmetrically or asymmetrically arranged by taking the radial plane of the tire center as a boundary line, and the left rim ring and the right rim ring are respectively composed of a rim which is evenly distributed around the axis of the inner ring and forms a closed loop; when symmetrically arranged, the tubular structure of the left rim ring and the tubular structure of the right rim ring are longitudinally penetrated; when the left rim ring and the right rim ring are asymmetrically arranged, the left rim ring and the right rim ring can be partially staggered or positively staggered, and the positively staggered refers to that the intersection position between the two rims in the left rim ring correspond to the circle center of the rim of the right rim ring, and compared with symmetrical arrangement and partially staggered arrangement, the structure can obtain the optimal buffering performance when the tire is in contact with the ground. Because the left rim ring and the right rim ring are evenly distributed, the connecting lines between the two rims in the left rim ring leads to a vertical plane perpendicular to the outer ring 2, the intersection of the vertical plane and the outer ring 2 does not have a supporting point, and the extension line of the intersection line of the vertical plane and the outer ring 2 is just overlapped with the connection line of the rim in the right rim ring and the outer ring 2, so that uniform supporting of each point of the outer ring 2 of the wheel rim 3 on the tire structure is guaranteed to ensure even force of the whole tire structure and improve comfort.

A radial cross section of the tire with tubular embedded open-structure is a trapezoid structure with equal size of the inner ring and the outer ring or larger outer ring 2 and smaller inner ring 1, the trapezoid structure is a state which is inclined towards the inside of the tire axis from the outer ring 2 to the inner ring 1, and the tubular structure of the rim 3 is also obliquely arranged corresponding to the trapezoidal structure.

## Claims

1. A burst-resistant tire with tubular embedded open-structure, comprising an outer ring (2) and an inner ring (1); the outer ring (2) is divided into a left outer ring and a right outer ring symmetrically arranged through a radial plane of a tire center, wherein a left rim ring is provided between the left outer ring and the inner ring (1) , a right rim ring is arranged between the right outer ring and the inner ring (1), the left rim ring and the right rim ring are connected at the radial plane of the tire center;
the left rim ring comprises a plurality of rims (3) evenly distributed around an axis of the inner ring (1) and two adjacent rims (3) are mutually connected to form a closed loop, and each rim (3) of the left rim ring is in contact with the left outer ring and the inner ring (1); the right rim ring comprises a plurality of rims (3) evenly distributed around an axis of the inner ring (1) and two adjacent rims (3) are mutually connected to form a closed loop, and each rim (3) of the right rim ring is in contact with the right outer ring and the inner ring (1);
each rim (3) is parallel to the axis of the inner ring (1) and is a tubular structure with a circular, an oval or a polygonal shape;
wherein the left rim ring and the right rim ring are symmetrically arranged, and **characterised in that** a tubular structure of the left rim ring and the tubular structure of the right rim ring are longitudinally penetrated.

2. The tire with tubular embedded open-structure according to claim 1, **characterized in that** the radial cross section of the tire with tubular embedded open-structure is a trapezoid structure with equal size of the inner ring (1) and the outer ring (2) or larger outer ring and smaller inner ring (1).

## Patentansprüche

1. Berstsicherer Reifen mit schlauchförmig eingebetteter offener Struktur, umfassend einen Außenring (2) und einen Innenring (1), wobei der Außenring (2) in einen linken Außenring und einen rechten Außenring unterteilt ist, die symmetrisch durch eine radiale Ebene einer Reifenmitte angeordnet sind, wobei ein linker Felgenring zwischen dem linken Außenring und dem Innenring (1) vorgesehen ist, wobei ein rechter Felgenring zwischen dem rechten Außenring und dem Innenring (1) angeordnet ist, wobei der linke Felgenring und der rechte Felgenring in der radialen Ebene der Reifenmitte verbunden sind;
wobei der linke Felgenring eine Vielzahl von Felgen (3) umfasst, die gleichmäßig um eine Achse des Innenrings (1) verteilt sind, wobei zwei benachbarte Felgen (3) miteinander verbunden sind, um eine geschlossene Schleife zu bilden, und wobei jede Felge (3) des linken Felgenrings mit dem linken Außenring und dem Innenring (1) in Kontakt ist; Wobei der rechte Felgenring eine Vielzahl von Felgen (3) umfasst, die gleichmäßig um eine Achse des Innenrings (1) verteilt sind, wobei zwei benachbarte Felgen (3) miteinander verbunden sind, um eine geschlossene Schleife zu bilden, und wobei jede Felge (3) des rechten Felgenrings mit dem rechten Außenring und dem Innenring (1) in Kontakt ist;
wobei jede Felge (3) parallel zur Achse des Innenrings (1) ist und eine röhrenförmige Struktur mit einer kreisförmigen, ovalen oder polygonalen Form hat;
wobei der linke Felgenring und der rechte Felgenring symmetrisch angeordnet sind, und **dadurch gekennzeichnet, dass** eine röhrenförmige Struktur des linken Felgenrings und die röhrenförmige Struktur des rechten Felgenrings in Längsrichtung durchdrungen sind.

2. Reifen mit schlauchförmig eingebetteter offener Struktur nach Anspruch 1, **dadurch gekennzeichnet, dass** der radiale Querschnitt des Reifens mit schlauchförmig eingebetteter offener Struktur eine trapezförmige Struktur mit gleicher Größe des Innenrings (1) und des Außenrings (2) oder größerem Außenring und kleinerem Innenring (1) ist.

## Revendications

1. Pneu résistant à l'éclatement à structure ouverte tubulaire encastrée, comprenant un anneau extérieur (2) et un anneau intérieur (1); ledit anneau extérieur (2) est divisé en un anneau extérieur gauche et un anneau extérieur droit disposés symétriquement à travers un plan radial d'un centre de pneu, dans lequel un anneau de jante gauche est prévu entre ledit anneau extérieur gauche et ledit anneau intérieur (1), un anneau de jante droit est disposé entre ledit anneau extérieur droit et ledit anneau intérieur (1), ledit anneau de jante gauche et ledit anneau de jante droit sont connectés audit plan radial dudit centre de pneu;
ledit anneau de jante gauche comprend une pluralité de jantes (3) uniformément réparties autour d'un axe dudit anneau intérieur (1) et deux jantes adjacentes (3) sont mutuellement connectées pour former une boucle fermée, et chaque jante (3) dudit anneau de jante gauche est en contact avec ledit anneau extérieur gauche et ledit anneau intérieur (1); ledit anneau de jante droit comprend une pluralité de jantes (3) uniformément réparties autour d'un axe dudit anneau intérieur (1) et deux jantes adjacentes (3) sont mutuellement connectées pour former une boucle fermée, et chaque jante (3) dudit anneau jante droit est en contact avec ledit anneau extérieur droit et ledit anneau intérieur (1);
chaque jante (3) est parallèle audit axe dudit anneau intérieur (1) et est une structure tubulaire de forme circulaire, ovale ou polygonale;
dans lequel ledit anneau de jante gauche et ledit anneau de jante droit sont disposés symétriquement, et **caractérisé en ce qu'**une structure tubulaire dudit anneau de jante gauche et ladite structure tubulaire dudit anneau de jante droit sont pénétrées longitudinalement.

2. Pneu résistant à l'éclatement à structure ouverte tubulaire encastrée selon la revendication 1, **caractérisé en ce qu'**une section transversale radiale dudit pneu résistant à l'éclatement à structure ouverte tubulaire encastrée est de structure trapézoïdale avec une taille égale dudit anneau intérieur (1) et dudit anneau extérieur (2) ou anneau extérieur plus grand et anneau intérieur plus petit (1).
